# EUROPEAN PATENT SPECIFICATION

(11) **EP 2 116 785 B1**
(45) Date of publication and mention of the grant of the patent: **07.02.2018**
(21) Application number: 09251264.9
(22) Date of filing: 06.05.2009
(51) Int. Cl.: F24F 7/00

(54) **A combined heating and ventilation unit**
Lüftungs- und Heizungseinheit
Unité de ventilation et de chauffage

(30) Priority: 08.05.2008 GB 0808327
(43) Date of publication of application: 11.11.2009
(73) Proprietor: NuAire Limited, Caerphilly Mid Glamorgan CF83 1NA (GB)
(72) Inventor: Biggs, Colin J., Caerphilly, Mid Glamorgan CF83 1NA (GB)
(74) Representative: Davies, Gregory Mark

(56) References cited:
- GB-A- 2 220 475
- GB-A- 2 251 301
- JP-A- 2005 326 047
- US-A- 5 862 982
- US-A1- 2002 164 944

## Description

This invention relates generally to a ventilation unit for a building, and more particularly to a ventilation unit wherein fresh supply air from outside the accommodation space of the building can be mixed with air drawn from the accommodation space, before being distributed around the accommodation space.

Ventilation is required in a building that contains people or animals in order to dilute odours, limit the concentration of CO₂ and airborne pollutants and to remove excess moisture produced through every day activities. In the past, buildings had natural ventilation, however, due to the improvements in the efficiency of building work, buildings are intentionally made more air tight and as a result are less well ventilated.

Typically, ventilation methods may require the extraction of exhaustive air and the supply of fresh air, from outside the building, by mechanical or forced ventilation means. Alternatively, air from the building may be re-circulated and a percentage of exhaust air may be replaced by air from outside the building.

It is highly desirable to make such ventilation systems as energy efficient as possible. Accordingly, more advanced ventilation methods currently on the market use counter and cross flow, and regenerative heat exchangers to permit heat recovery ventilation, whereby the device recovers the heat from the extract air and transfers this energy to the supply air, heating up the incoming supply air as a result. During the procedure the supply and extract air flow paths pass next to each other but do not mix. Up to 95% of the heat from the extracted stale air may be recovered.

In such systems the temperature increase of the supply air is dependent on the temperature of the air in the dwelling since the energy of the extract air is transferred to the supply air. This energy may be supplied by a central heating system, from a forced heating system or from an electric heating system. This dependency on the temperature of the extract air may lead to difficulties regarding climate control of the supply air and in some instances undesirable drafts may be encountered.

It is also the case that the building will require a means of space heating that will compensate for the thermal losses that occur through the fabric of the building enclosure (in order to maintain a comfortable internal temperature).

Typically such means consist of a fluid heating device located in one area of the building, and a pumped distribution system of pipes and wall or floor mounted radiators that release the heat throughout the property.

Such systems require considerable construction effort on site, are expensive and occupy useful space within the building - restricting its use.

Air is also used as a distribution means within buildings, but typically required the use of large ducts and fan / heater arrangements.

In modern buildings that have lower thermal losses (by means of improved construction and insulation), it has become possible to transfer sufficient energy for space heating by means of air within the normal ventilation ductwork.

GB 2251301 A is an example of a known system which comprises an electrically operated heating or cooling unit with forced ventilation. The GB 2251301 A arrangement can be used to serve several rooms, each having its own 'augmenting' (i.e. additional/ supplementary) unit. The augmenting unit includes an auxiliary fan, a heater/cooler and a valve system. The valve system permits adjustment according to the needs of a particular room as well as operation when the central appliance is shut off. Thus, GB 2251301 A describes a ventilation system which is constructed of a central appliance connected to additional heaters/coolers provided in different rooms.

In accordance with the present invention, there is provided a ventilation unit for a building, the unit comprising an inlet for air drawn from the building and to be re-circulated to the building; an inlet for external air drawn from externally of the building; a mixing zone for mixing of the external air and the air drawn from the building; an air distribution outlet arrangement for distribution of air to a plurality of different zones internally of the building; and an air temperature control arrangement providing airflows of different temperatures to be distributed via the distribution outlet arrangement to the different zones internally of the building. The ventilation unit is characterised in that the unit further comprises a casing, and that the inlets, the mixing zone and the air distribution outlet arrangement are arranged within the casing.

In a preferred realisation of the invention, the unit preferably further comprises a heat exchanger to permit heat exchange between extracted air (air being extracted from internally of the building to be exhausted externally of the building) and the external ventilating air drawn into the unit from externally of the building. This provides for heat recovery from the extracted air and improves the overall efficiency of the unit. The extracted air may be from a wet room, kitchen or other room or space comprising the building.

Beneficially a control arrangement of the ventilation unit controls the balance of the external air and the air drawn from the building.

It is preferred that the unit includes an extractor fan to extract air from internally of the building to be exhausted externally of the building.

The unit preferably includes a supply fan to draw into the unit the external ventilating air and the air from the building for re-circulation.

In one embodiment, the unit may include a by-pass means operable to permit airflow to by pass the supply fan. The by pass means may be used when the supply fan is not in operation to provide a low resistance air flow path by-passing the fan. The control arrangement beneficially controls operation of the by-pass means.

In one embodiment, the air temperature control arrangement comprises a heater and means of varying the heating effect of the heater to different components of the airflow. In one embodiment this may be achieved by means of a two part heater one adjacent the other, in parallel, in the airflow, each arranged to heat the air to a different temperature and the different temperature heated air subsequently being directed to different respective internal zones of the building, via the air distribution outlet arrangement of the unit.

The air temperature control arrangement (for example the heater) is preferably provided downstream of the mixing zone and also preferably upstream of the air distribution outlet arrangement.

A primary airflow path is provided via the air temperature control arrangement (for example the heater), toward the air distribution outlet arrangement. In one embodiment, it is preferred that a secondary airflow path is provided by-passing the air temperature control arrangement (for example the heater).

In certain embodiments it may be preferred that a flow divider element is provided downstream of the air temperature control arrangement (for example the heater) to divide the airflow for distribution into the air distribution outlet arrangement.

Beneficially, the position of the divider element with respect to the heater is re-configurable in order to vary the distribution of air from the heater to the distribution outlet arrangement.

It is preferred that the control arrangement of the unit enables operation in different modes in which the proportions of external air and air drawn from the building are mixed in different ratios.

Beneficially, the unit includes a control damper arrangement enabling operation in a mode in which substantially no air is drawn from the building to be mixed with the external air. In this mode of operation, the ventilating air is drawn directly into the unit and distributed via the air distribution outlet arrangement.

The invention extends to a ventilation system comprising at least one ventilation unit as described above.

These and other aspects of the invention will be apparent from, and elucidated with reference to, the embodiment described herein.

An embodiment of the present invention will now be described, by way of example only and with reference to the accompanying drawings, in which:
Figure 1 is a schematic illustration showing the cross sectional plan view of the ventilation unit.
Figure 2 is a schematic illustration showing the cross sectional plan view of an alternative embodiment of the ventilation unit;
Figure 3 is a schematic view of a detail of an alternative embodiment.

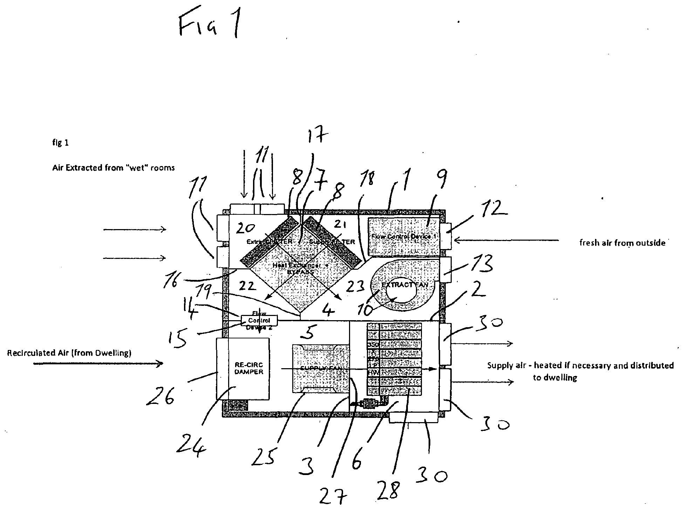

Referring to Figure 1 of the drawings, the ventilation unit consists of an outer rectangular casing 1, typically formed by sheet metal, for example aluminium. A first dividing wall 2 is positioned across the width of the casing and a second dividing wall 3 is positioned between the first dividing wall and the casing, whereby the first dividing wall is perpendicular to the second dividing wall. The casing and the subsequent arrangement of the walls form three chambers (4, 5, 6).

The first chamber 4 houses a rectangular heat recovery heat exchanger 7 with filters 8 arranged on two adjacent sides, a flow control device 9 (typically comprising a flow control damper arrangement) and an extract fan 10. A series of extract air inlets 11 are positioned in the wall of the outer casing along a section of a first side wall that is positioned substantially opposite to the first dividing wall 2, and along a section of a second side wall of the first chamber 4 that lies adjacent to the first side wall. The separate extract air inlets provide for air to be extracted by the unit from different zones (or rooms) of the building.

A supply air inlet 12 is arranged in the wall of the outer casing along a third side of the first chamber 4 that lies substantially opposite the second side wall. Adjacent to the supply air inlet 12, and positioned closer to the first dividing wall, is an extract air outlet 13. A supply air port 14 is arranged in the first dividing wall 2 near to the second side wall of the first chamber 4 and a flow control device 15 (typically comprising a flow control damper arrangement) is arranged in this space.

The rectangular heat exchanger 7 is arranged such that a single vertex of the heat exchanger is substantially parallel to and faces a single side of the first chamber 4, causing a given side of the heat exchanger to lie at a 45 degree angle with the first side wall of the chamber. The vertex with the filter arrangement either side of it faces the side wall of the first chamber that lies opposite to the first dividing wall 2.

Further dividing wall elements (16, 17, 18, 19) are arranged between each of the vertices and their corresponding side walls of the first chamber, thereby forming four further chambers, the fourth, fifth, sixth and seventh chambers (20, 21, 22, 23), within the first chamber 4.

The second chamber 5 houses a recirculation damper 24 and a supply fan 25. A recirculation air extract inlet 26 communicates via the recirculation damper with the chamber 5, being arranged in the outer casing of a first side of the second chamber 5 that lies opposite to the second dividing wall. The recirculation damper 24 may be closed to prevent recirculation air being drawn into unit, or open to permit recirculation air to be drawn. An air outlet 27 is arranged in the second dividing wall 3 immediately downstream of the supply fan 25.

The third chamber 6 houses a heating element, for instance a radiator arrangement 28 comprising thin aluminium plates attached to hollow coils. Other heating means are also envisaged and will be described later. The heating element is arranged to provide airflow exiting the heater of different temperatures to be directed to different zones in the building.

A series of supply air outlets 30 are distributed along the external sides of the third chamber 6, in the sides of the outer casing. Each of the outlets may be connected via a suitable respective duct to a separate roomspace or zone of the building. An aperture 27 in the second dividing wall is shared with the second chamber 5.

In use under the influence of the extract fan 10, the extracted air from a room such as a kitchen or wet room passes into the fourth chamber 20 via the extract air inlet 14 and flows through the extract filter 8 and through the heat exchanger 7, into the seventh chamber 23, whereby an extract fan 10 expels the extract air from the housing through the extract air outlet 13.

The air inlet 12 permits air from outside the casing to pass into a flow control device 9, located inside the fifth chamber 21. In operation the flow control device 9 controls the feed of external air towards the supply filter 8 and into the heat exchanger 7 whereby the path of the supply air passes near to, but does not mix with, the path of the extract air from the wet rooms and energy is transferred from the extract air from the wet rooms to the supply air, thereby increasing the temperature of the supply air. This aspect is referred to as heat recovery.

The pre-heated supply air, which has received energy from the extract air from the wet rooms, exits the heat exchanger 7 and enters the sixth chamber 22 wherein it passes through a flow control device 15 located in an air outlet 14 and into the second chamber 5.

Under the influence of the supply fan 25 and the degree of controlled opening of the recirculation damper 24, air from the dwelling flows through the air inlet. The pre-heated supply air and the recirculation air drawn from the dwelling mix together in the second chamber 5 to form a final supply air source and are propelled by the supply fan 25 into the third chamber through the supply air outlet 27 located in the second dividing wall 3.

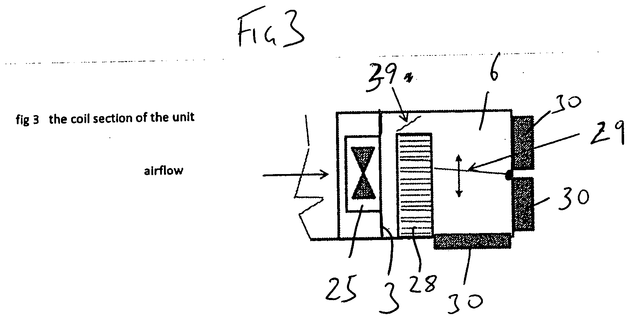

The final supply air flow path passes via the heating element 28. In one embodiment the heating element may be a radiator arrangement 28, where hot water is passed through coils and the heat is conducted along thin metal plates that are in thermal contact with the coils. The temperature of the water, and therefore the temperature of the radiator, is monitored and controlled by a control system. The heating element is arranged to provide airflow exiting the heater of different temperatures to be directed to different zones in the building. This may be achieved in a number of ways. For example the heater may comprise a radiator arrangement in which the temperature profile of the coils increases or decreases with distance across the radiator. Alternatively a series of electric heater elements may be used, with different heater elements at higher temperatures. Additionally or alternatively, a movable zoning divider arrangement 29 to be described in more detail in relation to figure 3 may be used. The effect is to provide air exiting the heater having portions which are heated to different degrees enabling the differently heated air to be directed selectively to different zones in the building in order to heat the zones toward different target temperatures.

The zoning divider 29 as shown in figure 3 comprises a metal plate that is pivotally mounted to the outer wall of the third chamber 6 located opposite to the second dividing wall. The zoning divider permits different quantities of the unheated/heated final air supply to pass through the supply air outlets, thus providing the means for supplying air of different temperatures to different supply outlets, whereby supply air of varying temperatures may be distributed to various zones of the dwelling or building. The control system for the unit controls the position of the zoning divider and alters the heated/unheated final supply air contribution to each air outlet. The arrangement of figure 3 also shows a by-pass baffle 39 which can be opened to define a by-pass airflow path to by-pass the heater 28. In the closed position the baffle 39 closes the heater by-pass path. This facility enables greater flexibility of the system to control the temperature profile of the airflows passing into the different outlets 30.

Alternatively several heater devices and control valves may be arranged in parallel, and sequentially with fans, allowing complete control of individual heating zones via separate thermal sensing devices.

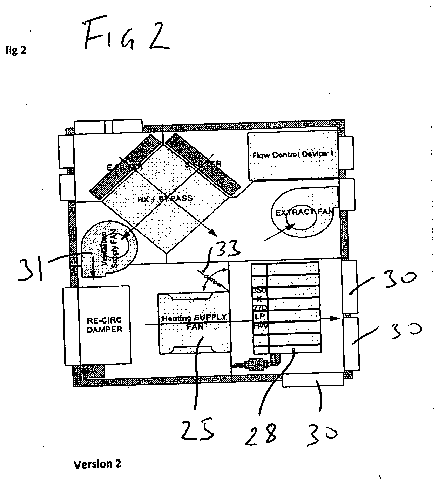

In the embodiment of Figure 2 the flow control device 15 of Figure 1 may be substituted by a ventilation supply fan 31 and the supply fan of Figure 1 may be replaced by a supply fan 32 in parallel with an aperture having a by-pass damper arrangement 33, whereby the damper 34 comprises a metal plate pivotable about a fixed point on the second dividing wall. In use the fan by-pass damper 33 permits the passage of unheated air from the second chamber to the third chamber through the aperture 34. In the damper closed state, air is prohibited from flowing through the by-pass aperture. In the damper open state air may pass through the aperture with minimum resistance. The damper may be moved between the open and closed states in order to alter the flow of final supply air from the second chamber 5 into the third chamber 6. For example in an operational mode in which the recirculation damper 24 is closed and no recirculation air is drawn into the unit via the inlet 26, the supply fan will typically not be operational and ventilating air drawn from externally of the unit via the inlet 12 will pass into the building via outlets 30 without having been mixed with re-circulating air. In such a mode of operation, the by-pass baffle 33 will be open to provide a by-pass airflow path of less resistance than the air flow path passing via the shut down fan 25. In certain embodiments a hating fan may be utilised.

The embodiment of figure 2 may additionally be provided with a heater by-pass arrangement as shown in figure 3.

A control system is used to monitor and control the various dampers, fans and flow control devices within the ventilation unit. This fulfils the requirement of i) minimising the required heat input of the dwelling by variation of system flow rates to suit the operation mode, and permits a ventilation only mode in addition to the ventilation and heating mode, which are activated by switches, and ii)carries out the balancing of fresh supply air with re-circulated extract air. In both cases, the principal flow rates for each of the operating modes may be measured, compared with the required values, and regulated by alteration of the speed of the main supply and extract fans. Such measurements may be accomplished by using calibrated orifice/entry devices or by means of power measurement and calibrated fan flow rate/ power "look up" tables. Alternatively the sensors may monitor the pressure and adjust the flow rates accordingly.

Thermal sensing devices may be implemented in monitoring the temperature of the air to be distributed around the dwelling or other building type and the control system may reposition the zoning divider or alter the temperature of the heating element such that target temperatures are reached for each zone.

In each embodiment each of the fan arrangements comprises a single fan in a protective casing or shroud, although it will be appreciated that each of the fan arrangements may comprise multiple fans in series or parallel.

In each embodiment the air inlets or air outlets may be single or multiple apertures and may be of varying sizes in order to perform their task.

The heat exchanger is arranged to provide a compact ventilation unit, however, in order to perform the desired function the heat exchanger may be orientated at varying angles to the reference point given above.

Advantages over conventional air based heating systems include the ability to heat up the fresh supply air using extract air from, for example, a wet room in order to provide a pre-heated fresh air supply that may then be mixed within the unit with re-circulated air from the dwelling or other building type, whereby the temperature of this final air supply may be controlled further and distributed around a dwelling or other building type such that various zones of a dwelling or other building type may be maintained at different target temperatures.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of hardware. The mere fact that certain measures are recited in mutually different dependent claims does not indicate that a combination of these measures cannot be used to advantage.

## Claims

1. A ventilation unit for a building, comprising:
an inlet (26) for air drawn from the building and to be re-circulated to the building;
an inlet (12) for external air drawn from externally of the building;
a mixing zone for mixing of the external air and the air drawn from the building;
an air distribution outlet arrangement (30) for distribution of air to a plurality of different zones internally of the building; and
an air temperature control arrangement providing airflows of different temperatures to be distributed via the distribution outlet arrangement (30) to the different zones internally of the building.
**characterised in that** the unit further comprises a casing, and that the inlets, the mixing zone and the air distribution outlet arrangement are arranged within the casing.

2. A ventilation unit according to claim 1, further comprising a heat exchanger (7) to permit heat exchange between air being extracted from internally of the building to be exhausted externally of the building and the external air drawn from externally of the building.

3. A ventilation unit according to any preceding claim, wherein a control arrangement controls the balance of the external air and the air drawn from the building.

4. A ventilation unit according to any preceding claim including an extractor fan (10) to extract air from internally of the building to be exhausted externally of the building.

5. A ventilation unit according to any preceding claim, including a supply fan to draw into the unit the external air and the air from the building for re-circulation.

6. A ventilation unit according to claim 5 wherein the unit includes a by-pass means operable to permit airflow to by pass the supply fan.

7. A ventilation unit according to any preceding claim, wherein the air temperature control arrangement comprises a heater (28) and means of varying the heating effect of the heater to different components of the airflow (29).

8. A ventilation unit according to claim 7, wherein the heater is provided downstream of the mixing zone and upstream of the air distribution outlet arrangement (30).

9. A ventilation unit according to claim 7 or claim 8, wherein a primary airflow path is provided via the heater, toward the air distribution outlet arrangement.

10. A ventilation unit according to claim 9, wherein a secondary airflow path is provided by-passing the heater.

11. A ventilation unit according to any of claims 7 to 10, wherein a flow divider element is provided downstream of the heater to divide the airflow for distribution into the air distribution outlet arrangement.

12. A ventilation unit according to claim 11, wherein the position of the divider element with respect to the heater is re-configurable in order to vary the distribution of air from the heater to the distribution outlet arrangement.

13. A ventilation unit according to any preceding claim, including a control arrangement enabling operation in different modes in which the proportions of external air and air drawn from the building are mixed in different ratios.

14. A ventilation unit according to any preceding claim, including a control damper arrangement enabling operation in a mode in which substantially no air is drawn from the building to be mixed with the external air.

15. A ventilation system for a building, the ventilation system including a ventilation unit according to any preceding claim.

## Patentansprüche

1. Lüftungseinheit für ein Gebäude, aufweisend:
einen Einlass (26) für Luft, die aus dem Gebäude gezogen wurde und zurück zum Gebäude umgewälzt werden soll;
einen Einlass (12) für Außenluft, die von außerhalb des Gebäudes eingezogen wird;
einen Mischbereich zum Mischen der Außenluft und der Luft, die aus dem Gebäude gezogen wurde;
eine Luftverteilungsauslassanordnung (30) zur Verteilung von Luft auf mehrere verschiedene Bereiche innerhalb des Gebäudes; und
eine Lufttemperatursteueranordnung, die Luftströme mit unterschiedlichen Temperaturen vorsieht, welche über die Luftverteilungsauslassanordnung (30) auf die verschiedenen Bereiche innerhalb des Gebäudes verteilt werden sollen,
**dadurch gekennzeichnet, dass** die Einheit ferner ein Gehäuse aufweist, und dass die Einlässe, der Mischbereich und die Luftverteilungsauslassanordnung innerhalb des Gehäuses angeordnet sind.

2. Lüftungseinheit nach Anspruch 1, ferner aufweisend einen Wärmetauscher (7) zum Ermöglichen von Wärmeaustausch zwischen Luft, die aus dem Inneren des Gebäudes zum Ablass nach außerhalb des Gebäudes abgezogen wurde, und der Außenluft, die von außerhalb des Gebäudes gezogen wurde.

3. Lüftungseinheit nach einem der vorhergehenden Ansprüche, wobei eine Steueranordnung die Ausgewogenheit der Außenluft und der Luft, die aus dem Gebäude gezogen wird, steuert.

4. Lüftungseinheit nach einem der vorhergehenden Ansprüche, enthaltend einen Sauglüfter (10) zum Abziehen von Luft von innerhalb des Gebäudes, die nach außerhalb des Gebäudes abgelassen werden soll.

5. Lüftungseinheit nach einem der vorhergehenden Ansprüche, enthaltend einen Versorgungslüfter zum Ziehen der Außenluft und der Luft aus dem Gebäude zur erneuten Umwälzung in die Einheit.

6. Lüftungseinheit nach Anspruch 5, wobei die Einheit ein Umgehungsmittel enthält, das zum Ermöglichen, dass ein Luftstrom den Versorgungslüfter umgeht, betriebsfähig ist.

7. Lüftungseinheit nach einem der vorhergehenden Ansprüche, wobei die Lufttemperatursteuereinheit einen Heizer (28) und Mittel zum Variieren der Heizwirkung des Heizers für verschiedene Komponenten des Luftstroms (29) aufweist.

8. Lüftungseinheit nach Anspruch 7, wobei der Heizer dem Mischbereich nachgelagert und der Luftverteilungsauslassanordnung (30) vorgelagert angeordnet ist.

9. Lüftungseinheit nach Anspruch 7 oder Anspruch 8, wobei ein primärer Luftstromweg über den Heizer zur Luftverteilungsauslassanordnung hin vorgesehen ist.

10. Lüftungseinheit nach Anspruch 9, wobei ein sekundärer Luftstromweg vorgesehen ist, der den Heizer umgeht.

11. Lüftungseinheit nach einem der Ansprüche 7 bis 10, wobei ein Stromteilerelement dem Heizer nachgelagert zum Teilen des Luftstroms zur Verteilung in die Luftverteilungsauslassanordnung vorgesehen ist.

12. Lüftungseinheit nach Anspruch 11, wobei die Position des Teilerelements bezüglich des Heizers neu konfigurierbar ist, um die Verteilung von Luft vom Heizer zur Verteilungsauslassanordnung zu variieren.

13. Lüftungseinheit nach einem der vorhergehenden Ansprüche, enthaltend eine Steueranordnung, die Betrieb in verschiedenen Modi ermöglicht, in denen die Proportionen von Außenluft und Luft, die aus dem Gebäude gezogen wurde, in verschiedenen Verhältnissen gemischt werden.

14. Lüftungseinheit nach einem der vorhergehenden Ansprüche, enthaltend eine Steuerdämpfungsanordnung, die Betrieb in einem Modus ermöglicht, in dem im Wesentlichen keine Luft aus dem Gebäude zur Mischung mit der Außenluft gezogen wird.

15. Lüftungssystem für ein Gebäude, wobei das Lüftungssystem eine Lüftungseinheit nach einem der vorhergehenden Ansprüche enthält.

## Revendications

1. Unité de ventilation pour un bâtiment, comportant :
une entrée (26) destinée à de l'air aspiré à partir du bâtiment et appelé à être recyclé vers le bâtiment ;
une entrée (12) destinée à de l'air extérieur aspiré à partir de l'extérieur du bâtiment ;
une zone de mélange servant au mélange de l'air extérieur et l'air aspiré à partir du bâtiment ;
un agencement (30) de sortie avec répartition d'air servant à la répartition d'air vers une pluralité de zones différentes à l'intérieur du bâtiment ; et
un agencement de régulation de température d'air fournissant des flux d'air de différentes températures appelés à être distribués via l'agencement (30) de sortie avec répartition aux zones différentes à l'intérieur du bâtiment,
**caractérisé en ce que** l'unité comporte en outre une enveloppe, et **en ce que** les entrées, la zone de mélange et l'agencement de sortie avec répartition d'air sont agencés à l'intérieur de l'enveloppe.

2. Unité de ventilation selon la revendication 1, comportant en outre un échangeur (7) de chaleur pour permettre un échange de chaleur entre de l'air qui est extrait de l'intérieur du bâtiment pour être évacué à l'extérieur du bâtiment et l'air extérieur aspiré à partir de l'extérieur du bâtiment.

3. Unité de ventilation selon l'une quelconque des revendications précédentes, un agencement de régulation régulant l'équilibre de l'air extérieur et de l'air aspiré à partir du bâtiment.

4. Unité de ventilation selon l'une quelconque des revendications précédentes, comprenant un ventilateur extracteur (10) servant à extraire de l'air de l'intérieur du bâtiment pour qu'il soit évacué à l'extérieur du bâtiment.

5. Unité de ventilation selon l'une quelconque des revendications précédentes, comprenant un ventilateur d'alimentation servant à aspirer dans l'unité l'air extérieur et l'air provenant du bâtiment en vue du recyclage.

6. Unité de ventilation selon la revendication 5, l'unité comprenant un moyen de dérivation utilisable pour permettre à un flux d'air de contourner le ventilateur d'alimentation.

7. Unité de ventilation selon l'une quelconque des revendications précédentes, l'agencement de régulation de température d'air comportant un élément chauffant (28) et un moyen de faire varier l'effet de chauffage de l'élément chauffant sur différentes composantes du flux (29) d'air.

8. Unité de ventilation selon la revendication 7, l'élément chauffant étant placé en aval de la zone de mélange et en amont de l'agencement (30) de sortie avec répartition d'air.

9. Unité de ventilation selon la revendication 7 ou la revendication 8, un trajet de flux d'air primaire étant mis en place via l'élément chauffant, en direction de l'agencement de sortie avec répartition d'air.

10. Unité de ventilation selon la revendication 9, un trajet de flux d'air secondaire étant mis en place contournant l'élément chauffant.

11. Unité de ventilation selon l'une quelconque des revendications 7 à 10, un élément diviseur de flux étant mis en place en aval de l'élément chauffant pour diviser le flux d'air en vue d'une répartition dans l'agencement de sortie avec répartition d'air.

12. Unité de ventilation selon la revendication 11, la position de l'élément diviseur par rapport à l'élément chauffant étant reconfigurable afin de faire varier la répartition de l'air provenant de l'élément chauffant vers l'agencement de sortie avec répartition.

13. Unité de ventilation selon l'une quelconque des revendications précédentes, comprenant un agencement de régulation permettant le fonctionnement dans différents modes où les proportions de l'air extérieur et de l'air aspiré à partir du bâtiment sont mélangées dans différents rapports.

14. Unité de ventilation selon l'une quelconque des revendications précédentes, comprenant un agencement de registre de régulation permettant le fonctionnement dans un mode où sensiblement aucun air n'est aspiré à partir du bâtiment pour être mélangé avec l'air extérieur.

15. Système de ventilation pour un bâtiment, le système de ventilation comprenant une unité de ventilation selon l'une quelconque des revendications précédentes.
